# EUROPEAN PATENT SPECIFICATION

(11) **EP 1 495 253 B1**
(45) Date of publication and mention of the grant of the patent: **25.10.2006**
(21) Application number: 03745846.0
(22) Date of filing: 19.03.2003
(51) Int. Cl.: F16L 37/252

(54) **METHOD USED FOR THE COUPLING OF COPPER TUBING SECTIONS**
ZUR VERBINDUNG VON KUPFERROHRTEILEN VERWENDETES VERFAHREN
NOUVEAU PROCEDE UTILISE POUR LE RACCORDEMENT DE PARTIES TUBULAIRES EN CUIVRE

(30) Priority: 09.04.2002 GR 2002100170
(43) Date of publication of application: 12.01.2005
(73) Proprietor: Chalkides, Nikolaos, 41335 Larissa (GR)
(72) Inventor: Chalkides, Nikolaos, 41335 Larissa (GR)
(86) International application number: PCT/GR2003/000010
(87) International publication number: WO 2003/085311

(56) References cited:
- EP-A- 1 176 354
- GB-A- 1 260 970
- US-A- 2 165 163

## Description

This method refers to the coupling of copper tubing sections carrying sealing O-rings, and the description for the construction of a special tool (press) which is necessary for this new method of coupling. The copper tube sections referred to may transport any kind of gas (natural gas, butane, propane ...) or liquid (petrol, water...). This new coupling method refers to a bayonet type coupling utilizing hemispherical protuberances, which is different from that described in document **D1,** i.e. **GB1260970**. Any advantages compared to **GB1260970** will be discussed following the description of the new method proposed.

The new coupling method does not necessitate the use of any hot or cold soldering nor of a special wrench or press system severely deforming copper material.

The advantages of this method are as follows :
A) Quick and simple coupling or release of tubing sections.
B) It does not deform any of the components (elbows, connectors, etc.) so that in case the piping configuration is changed later on the same components can be used again.
C) There is no need for a large, high-cost and cumbersome press (or special footprint wrench), however, a simple, low cost and versatile hand tool which forms part of this invention can be used, instead.

The method used to join copper components with copper pipes should be performed as follows :

Firstly, all the components (elbows, connectors, etc.) shall be provided with a sealing rubber O-ring which is fitted in a ring grove specially made for this purpose. This rubber ring is responsible for providing the necessary sealing for the coupling of pipes and components. If this new coupling method is to be applied, the components shall also carry a second ring grove running along the inner circumference of the component with two semi-cylindrical grove sections (for insertion and/or extraction of the pipe from the component) perpendicular to the second ring grove and reaching as far as the edge of the coupling end of the component. These semi-cylindrical groves shall be formed at diametrically-opposite places, i.e. at the ends of a diameter of the pipe's coupling end's opening. Two hemispherical protuberances on the pipe shall be aligned with the said semi-cylindrical grove sections and guided into the component's second inner ring grove. The protuberances may even have the form of a dash, if a higher degree of tightness is desired and are made by the technician on the copper pipe. A special tool (press) shall be used by the technician to form these hemispherical or dash-like protuberances. The pipe shall be inserted into the press and these standard size hemispherical protuberances shall be made at a specified distance from the pipe end. The protuberances shall be formed at such a distance from the end of the pipe that the desired degree of tightness can be achieved when the pipe is inserted into the sealing O-ring located at the component coupling end.

At the same time, by pushing the pipe into the component the said protuberances shall be guided through the perpendicular semi-cylindrical (in/out) grove sections into the second semi-cylindrical ring grove. Once the protuberances reach the second semi-cylindrical ring grove, the pipe cannot be pushed further into the component because this is not allowed by the walls of the second ring grove and the protuberances. Following that, the pipe shall be turned compared to the component less than 180 degrees. In doing so the protuberances shall be located inside the ring grove and move away from the two semi-cylindrical (in/out) grove sections. The result of this will be that the pipe can no longer be extracted from the component since the protuberances will be prevented from moving in/out of the component by the walls of the second ring grove. In order to prevent the pipe from accidentally turning while in place and subsequent alignment of the protuberances with the two perpendicular (in/out) grove sections, a wedge-like pin of suitable length can be used as a locking device. The wedge-like pin shall be inserted into one of the perpendicular (in/out) grove sections as far as the second ring grove thus preventing any accidental alignment of the protuberances with the in/out grove sections.

The press used by the technician shall enable the formation of the protuberances at such distance from the edge of the coupling end of the pipe that, when the protuberances are already located within the first ring grove, the edge of the pipe shall have gone past the second inner grove carrying the sealing O-ring found further down the component.

The tubing section (pipe), which has been chosen for coupling to a component, shall be inserted into the special press, at the same time two diametrically-opposite pistons located inside the press shall enter the tubing section at a suitable position from the end of the pipe. Then, the pistons shall be forced radially outwards by means of a lever on the press in order to slightly deform the inner wall of the pipe and form the two diametrically-opposite hemispherical protuberances **'c'** seen on the outer surface of the pipe. The press shall have an internal diameter equal to the external diameter of the pipe but only in the area extending from the pistons and towards the inside of the press, whereas in the area extending from the pistons as far as the point of entrance of the pipe the internal diameter of the press shall be larger than the external diameter of the pipe in order to allow enough room for the formation of the protuberances **'c'** as well as extraction of the pipe from the press.

The coupling method is shown in detail in the schematic diagrams 1 to 7. In these diagrams the component is depicted as **'1'** and the copper pipe as **'2'.** The rubber O-ring is represented by letter **'e',** whereas the first semi-cylindrical ring grove running along the inner circumference of the component and housing it is shown as **'a'.**

The second ring grove is depicted as **'b'.** The perpendicular semi-cylindrical (in/out) grove sections are depicted as **'b".** The protuberances formed by the technician are shown as **'c'.**

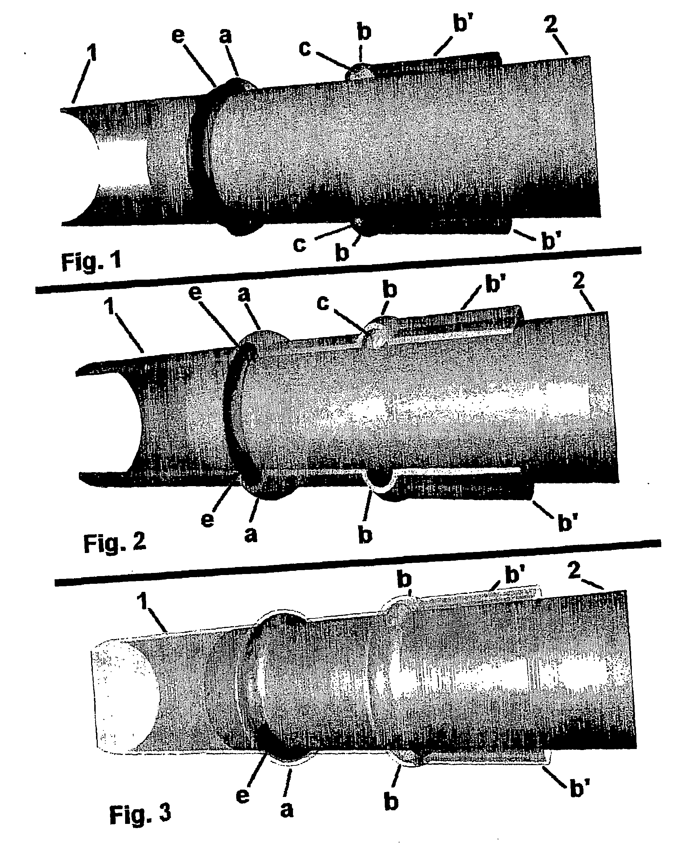

**Figure 1 :** it shows the cross-section of a component after it has been coupled to a pipe. The ring groves of the component, the hemispherical protuberances of the pipe as well as the sealing rubber O-ring are clearly visible.
**Figure 2 :** it shows the same layout as figure 1, except that the cross-section of the component is smaller.
**Figure 3 :** the complete component is clearly visible. The pipe section inside the component after coupling is also visible.

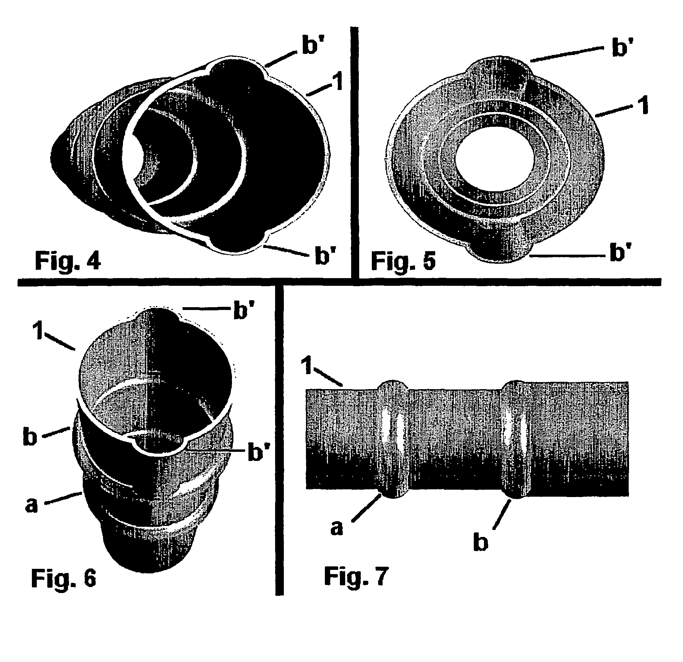

**Figure 4 :** it shows a 3-D view of the typical component clearly depicting the perpendicular semi-cylindrical (in/out) grove sections, **'b".**
**Figure 5 :** it shows a top view of the typical component.
**Figure 6** : it shows a 3-D view of the typical component along with the two ring groves **'a'** and **'b'** as well as the perpendicular semi-cylindrical (in/out) grove sections **'b".**
**Figure 7 :** it shows a side view of the typical component along with ring groves **'a'** and **'b'.**

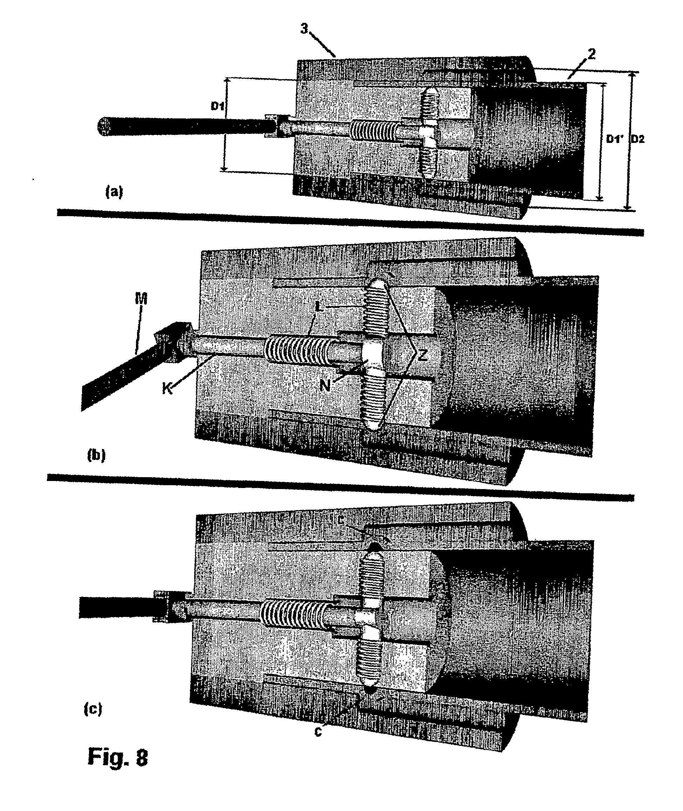

**Figures 8 (a, b, c)** and **9 (a, b, c)** show the cross-sections of two different versions of the press which can be used by the technician to form protuberances **'c',** on the pipe. In these diagrams, number **'3'** represents the press, the lever of the press to be pressed by the technician is symbolized by letter **'M',** shaft **'K'** conveys the pressure to pistons **'Z',** and letter **'L'** represents the springs which are necessary for pushing the moving parts of the press back to their original place. Letters **'D1'** and **'D2'** symbolize the two different inner diameters whereas letter **'D1"** represents the external diameter of the pipe.

In Figure 8, letter **'N'** represents a cylinder of elliptical cross-section which transforms the rotational movement of shaft **'K'**, into piston movement **'Z'**, perpendicular to the shaft axis.

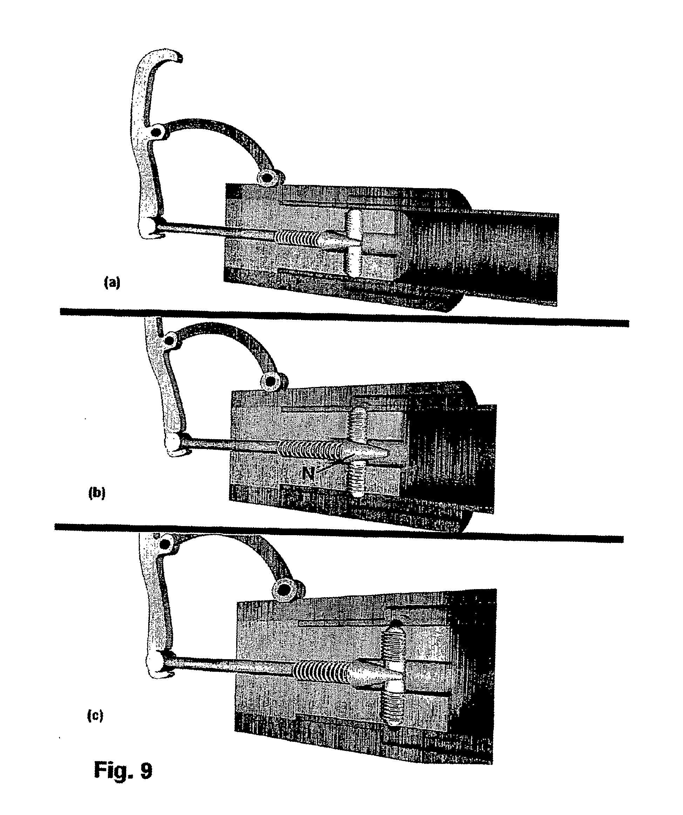

In Figure 9, letter **'N"** represents a conical component which turns the axial movement of shaft **'K'**, into piston movement **'Z'**, perpendicular to the shaft axis.

### Comparison to document D1, i.e. GB1260970

**1.** The only feature of the new method that is common to both methods is that they both utilize a bayonet type coupling although different in concept.
   The remaining features are different from those described in **GB1260970** and are as follows:
   (a) The bayonet type coupling of the new method utilizes two diametrically opposite hemispherical protuberances **'c'** formed on the outer surface of the pipe using the special press **'3'.**
   **(b)** The formation of the two hemispherical protuberances **'c'** described in 1(a) above is performed *in situ* by the technician, and only necessitates the use of press **'3'.**
   **(c)** The formation of the two hemispherical protuberances described in 1(a) and 1(b) above can be performed on any given length of metal pipe section *in situ* and does not necessitate work carried out at the workshop.
   (d) The various components (elbows, connectors, etc.) are cast in industrial copper foundry facilities according to the specifications of the inventor depending on the needs for each pipe diameter, and can be used in conjunction with the new coupling method only.

## Claims

1. Method for coupling tubing sections of any type of metal **'2',** especially copper, to components **'1'** (elbows, connectors, etc.) carrying specially formed groves and a sealing rubber O-ring. The components (elbows, connectors, etc.) carrying a first ring grove **'a'** accommodating a rubber O-ring **'e'** for sealing purposes and a second ring grove **'b'** between the first ring grove **'a'** and the edge of the coupling end (as shown in the diagrams), two diametrically opposite semi-cylindrical in/out grove sections **'b''** perpendicular to the second ring grove **'b'** starting at the edge of the coupling end as far as the second ring grove 'b' being present comprising:
**(a)** cutting a pipe section to the desired length, and
**(b)** inserting the pipe **'2'** in a press **'3',** thus enabling at the same time two diametrically opposite pistons **'Z'** located inside the press **'3'** enter the pipe **'2'** at suitable positions, wherein, the press **'3'** has an inner diameter **'D1'** equal to the external diameter of the pipe **'D1'** only in the area extending from pistons **'Z'** to the inside of the press, whereas in the area extending from pistons 'Z' as far as the point of entrance of the pipe the internal diameter of the press **'D2'** is larger than the external diameter of the pipe **'D1'** in order to allow room for the formation of two hemispherical protuberances **'c'** and extraction of the pipe from the press,
**(c)** using the special tool (press) **'3'** to create the two protuberances on the outer surface of the pipe 'c', by exerting a pressure which is conveyed from the horizontal shaft **'K'** to the component **'N'** or **'N"** (depending on the type of press used, Figure 8 or 9), by pressing lever **'M'** which forms part of the press **'3',** the component, **'N'** or **'N''** pushing the two pistons **'Z'** so that they extend outwards and perpendicularly to the shaft axis from the inside of the pipe and exert pressure on the inner surface of the pipe, thereby deforming slightly the wall of the pipe, thus, creating two diametrically opposite hemispherical protuberances **'c'** seen on the outside wall of the pipe,
**(d)** the connection itself comprising aligning with the in/out grove sections **'b"** perpendicular to the second ring grove **'b',** said protuberances **'c'** of the pipe being pushed in the guiding grove sections as far as the second ring grove **'b',** rotating the pipe less than 180 degrees, the protuberances **'c'** thus rotating in the second ring grove **'b',** thereby preventing extraction of the pipe from the component.

## Patentansprüche

1. Methode zur Verbindung von Rohrteilen aller Metalltypen **'2',** insbesondere von Kupfer, mit Komponenten **'1'** (Knierohre, Muffen, usw.) die mit speziell geformten Vertiefungen und einem O-förmigen Gummidichtungsring versehen sind. Die Komponenten (Knierohre, Muffen, usw.) sind mit einer ersten Ringvertiefung **'a'** versehen, in der ein O-Gummiring **'e'** zu Dichtungszwecken eingebracht ist, sowie mit einer zweiten Ringvertiefung **'b',** die sich zwischen der ersten Ringvertiefung **'a'** und dem Rand des Verbindungsendstücks (siehe Diagramme) befindet, zwei diametral gegenüberliegenden halbzylindrischen ein/aus Vertiefungsstellen **'b'',** die vom Rand des Verbindungsendstücks bis zur zweiten Ringvertiefung **'b'** senkrecht zur zweiten Ringvertiefung **'b'** verlaufen. Dabei umfasst die Methode Folgendes:
(a) Das Zurechtschneiden des Rohrteils auf die gewünschte Länge, und
(b) Einschieben von Rohr **'2'** in eine Rohrpresse **'3',** wobei gleichzeitig zwei diametral gegenüberliegende Kolben **'Z'**, die sich an geeigneten Positionen in der Rohrpresse **'3'** befinden, in das Rohr **'2'** eingeführt werden, wobei die Rohrpresse **'3'** einen Innendurchmesser **'D1'** aufweist, der dem äußeren Rohrdurchmesser **'D1'** nur in dem Bereich entspricht, der sich von den Kolben **'Z'** zum Inneren der Rohrpresse erstreckt, während in dem Bereich, der sich von den Kolben **'Z'** bis zum Einführungspunkt des Rohrs erstreckt, der Innendurchmesser der Rohrpresse **'D2'** größer als der äußere Rohrdurchmesser **'D1'** ist, um den erforderlichen Spielraum zur Formung der beiden halbkugelförmigen Ausbuchtungen **'c'** und zur Entnahme des Rohres aus der Rohrpresse zu gewährleisten,
(c) die Verwendung des Spezialwerkzeugs (Rohrpresse) **'3'** zur Anbringung der beiden Ausbuchtungen **'c'** an der Rohraußenfläche durch Druckausübung, welche vom horizontal ausgerichteten Schaft **'K'** auf die Komponente **'N'** oder **'N''** übertragen wird (je nach angewendetem Typ der Rohrpresse, siehe Abbildung 8 oder 9). Die Komponente **'N'** oder **'N''** drückt daraufhin die beiden Kolben **'Z'** vom Rohrinneren senkrecht zur Schaftachse nach außen und übt somit Druck auf die Rohrinnenfläche aus, wodurch die Rohrwand leicht verformt wird und zwei diametral gegenüberliegende halbkreisförmige Ausbuchtungen **'c'** geformt werden, die auch an der Rohraußenwand sichtbar sind,
(d) die Verbindung selbst, welche in der Ausfluchtung der ein/aus Vertiefungsstellen **'b''** senkrecht zur zweiten Ringvertiefung **'b',** den oben beschriebenen Rohrausbuchtungen **'c'**, die bis zur zweiten Ringvertiefung **'b'** in die Führungselemente (Vertiefungsstellen) eingeführt werden, und der Rotation des Rohres um weniger als 180 Grad besteht, wodurch die Ausbuchtungen 'c' in der zweiten Ringvertiefung **'b'** verdreht werden, sodass ein Ausziehen des Rohrs aus der Komponente verhindert wird.

## Revendications

1. Une méthode d'assemblage de tubes de tout type de métal **« 2 »**, en particulier en cuivre, avec de pièces « **1** » (coudes, moufles, etc.) qui portent des rainures spécialement créées et une bague-O en caoutchouc. Les pièces (coudes, moufles, etc.) portent la première rainure « **a** » avec une bague-O « **e** » en caoutchouc pour de raisons d'étanchéité et une seconde rainure « **b** » entre la première rainure « **a** » et le bout de l'assemblage (comme indiqué aux schémas), deux parties de rainure diamétralement opposées et semi-cylindriques « **b'** », perpendiculaires par rapport à la seconde rainure « **b** » qui commence au bout du joint et s'étend jusqu'à la seconde rainure « **b** ». Cette méthode comprend ce qui suit :
**(a)** couper un tube à la longueur désirée, et
**(b)** introduire le tube « **2** » dans la presse « **3** », tout en permettant aux deux pistons « **Z** » diamétralement opposés et situés dans la presse « **3** » d'entrer dans le tube « **2** » à des positions convenables ; la presse « **3** » a un diamètre interne « **D1** » égale au diamètre externe du tuyau **« D1 »** seulement dans la zone qui s'étend des pistons « **Z** » à l'intérieur de la presse, tandis que dans la zone qui s'étend des pistons « **Z** » jusqu'au point d'entrée du tube le diamètre interne de la presse « **D2** » est plus large que le diamètre externe du tube « **D1** » afin de donner de l'espace pour la formation de deux protubérances hémisphériques « **c »** et l'extraction du tube de la presse,
**(c)** utiliser l'outil spécial (presse) « **3** » afin de créer les deux protubérances sur la surface externe du tube « **c »** : il faut exercer de la pression en appuyant sur le levier « **M** » qui forme partie de la presse « **3** ». La pression est transmise par l'arbre horizontal « **K** » à la pièce « **N** » ou « **N'** » (selon le type de la presse utilisée, Figure 8 ou 9) ; la pièce « **N** » ou « **N'** » pousse les deux pistons « **Z** » qui s'étendent vers l'extérieur et de façon perpendiculaire à l'axe de l'arbre par l'intérieur du tube et exercent de la pression sur la surface intérieure du tube, en déformant ainsi légèrement la paroi du tube et en créant les deux protubérances diamétralement opposées et hémisphériques « **c** » visibles sur la paroi externe du tube,
**(d)** l'assemblage comprend un alignement sur les parties de rainure « **b'**» perpendiculaires sur la seconde rainure « **b** » ; les protubérances « **c** » du tuyau sont poussées vers les parties de rainure de guidage jusqu'à la seconde rainure « **b** » , en faisant tourner le tube de moins de 180 degrés; donc, les protubérances « **c** » tournent dans la seconde rainure « **b** », ce qui empêche l'extraction du tube de la pièce.
